# EUROPEAN PATENT APPLICATION

(11) **EP 4 477 915 A1**
(43) Date of publication of application: **18.12.2024**
(21) Application number: 23203279.7
(22) Date of filing: 12.10.2023
(51) Int. Cl.: F16F 7/10, F16F 15/00

(54) **BROADBAND TUNABLE PIEZOELECTRIC MASS DAMPER (PIEMDAM)**

(30) Priority: 14.06.2023 GR 20230100506
(71) Applicant: Panepistimio Patron, 26504 Rio Patra (GR); Chatziathanasiou, Grigorios, 16331 Patra (GR); Chrysochoidis, Nikolaos, 26504 Agios Vasileios (GR); Saravanos, Dimitrios, 26504 Agios Vasileios (GR)
(72) Inventor: CHATZIATHANASIOU, GRIGORIOS, 16331 PATRA (GR); CHRYSOCHOIDIS, NIKOLAOS, 26504 AGIOS VASILEIOS (GR); SARAVANOS, DIMITRIOS, 26504 AGIOS VASILEIOS (GR)
(74) Representative: Kosti, Vasiliki

(57) **Abstract**

The present invention relates a tunable vibration attenuation device (100) configured to be mounted to a host structure (1) for attenuating vibrations in multiple frequency ranges. The device (100) comprises an auxiliary mass (4) and a shunt piezoelectric system (8) electromechanically coupled between the host structure (1) and the auxiliary mass (4). The shunt piezoelectric system (8) comprising an array of a plurality of piezoelectric devices (2), each connected to at least one shunt circuit (3). Each piezoelectric device (2) being configured to generate electric charge in response to the relative movement of the host structure (1) and the auxiliary mass (4), wherein part of the electric charge is transmitted to at least one shunt circuit (3) of each piezoelectric device (2), and wherein the electrical characteristics of the shunt circuit (3) are adapted to control the oscillatory characteristics of the corresponding piezoelectric devices (2) in one or more vibration frequency ranges of the host structure (1) so as to tune the vibration attenuation device (100) to suppress the host structure vibrations at the desired frequency ranges.

## Description

### Field

The present invention relates to a tunable vibration attenuation device configured to suppress the vibrations of host structures in multiple frequency ranges.

### Background

Host structures such as lightweight structures and transportation vehicles are often subjected to vibrations from a variety of loads, which exhibit either changing tonal frequencies (e.g., car-engine RPMs) or broadband and uncertain frequencies (e.g., unsteady aerodynamic loads on aircrafts). These vibrations affect the safety and comfort of pilots, passengers, and civilians, and may lead to material fatigue deterioration or even failure.

Anti-vibration devices which use a tuned mass to mitigate the vibrations of the host structure are well known for their efficiency in civil engineering and have been investigated and implemented in many skyscrapers and bridges. These devices are known as Tuned Mass Dampers (TMDs) and consist of an auxiliary mass, attached to a means of stiffness (e.g., spring-damper). The mass and the stiffness of these devices are chosen such that the TMD eigenfrequency coincides or is very close to an eigenfrequency, or a frequency of excessive excitation of the host structure. The vibration reduction of the host structure is achieved via 2 mechanisms: (i) the kinetic energy of the host structure is transmitted to the auxiliary mass and (ii) this energy gets dissipated as heat due to the damping of the TMD, as it oscillates from the mass host structure to the auxiliary mass, and vice-versa. Despite the strong capability of the TMD for great vibration reduction, it is not suitable for applications of mechanical, aeronautical, and naval engineering, where the excitations may come from various and time-changing frequency spectrums. The fundamental hindrance of the conventional TMD for such applications is that the eigenfrequency of the TMD is fixed, and the adaptation to a new frequency range would require a new design and attachment of the auxiliary mass, while targeting multiple frequency ranges would require multiple TMD setups, drastically increasing the added weight.

Another well-known, mean of vibration reduction, is the attachment of piezoelectric patches on the surface of the host structure of interest, at the terminals of which a shunted resistance-inductance (RL) circuit is attached. An example of such structure is discussed in N. W. Hagood and A. von Flotow, "Damping of structural vibrations with piezoelectric materials and passive electrical networks," J. Sound Vib., vol. 146, no. 2, pp. 243-268, 1991, doi: https://doi.org/10.1016/0022-460X(91)90762-9. In this method, a fraction of the strain energy of the host structure is transformed to electrical energy due to the electromechanical coupling of the piezoelectric material, and subsequently dissipated in the form of heat in the resistance of the shunt circuit. Tuning the values of resistance and inductance can lead to amplification of the energy that is transformed to electric and then dissipated in the form of heating in the resistance. Moreover, the change of resistance-inductance combination (electrical impedance) can re-tune the resonance of this damping device to an abrupt alteration of the excitation frequency, empowering the easy-to-implement adaptive feature of this method, which is achieved without altering its mechanical part. However, the piezoelectric patch generally consists of only one layer of piezoelectric material and exhibits relatively low piezoelectric coefficient, leading to moderate electromechanical coupling and by extension moderate ability of vibration mitigation. Furthermore, this method is only applicable to specific applications (thin-walled and smooth-surface structures, lightweight panels, etc.) and to areas of high strain concentration, greatly limiting the range of the potential host structures.

In Chatziathanasiou et.al. "A semi-active shunted piezoelectric tuned-mass-damper for multi-modal vibration control of large flexible structures", Journal of Sound and Vibration, Volume 537, 2022, 117222, ISSN 0022-460X, https://doi.org/10.1016/j.jsv.2022.117222, the combination of a TMD with a single shunt piezoelectric device was investigated for the suppression of vibrations resulting from the broadband frequency excitation of the host structure. However, the proposed device is adapted to control the vibrations only near the vicinity of the device stiffness-auxiliary mass eigenfrequency range. As such, vibration resulting from broadband frequencies outside this range may not be effectively suppressed. Furthermore, multiple tonal vibrations outside this frequency range may not be effectively suppressed, as this would require multiple anti-resonances.

Therefore, there is a need to provide a device for attenuating the vibrations of a host structure that is capable of operating both in broadband and tonal excitation frequencies of the host structure and can be applied to a broad range of applications.

### Summary

The aim of the present invention is to provide a tunable vibration attenuation device that overcomes the disadvantages of known solutions.

The above aims are being achieved with the device provided in the independent claim, while preferred embodiments are described in the dependent claims.

According to an aspect of the present invention, a tunable vibration attenuation device configured to be coupled to a host structure for attenuating vibrations in multiple frequency ranges, the device comprising:
an auxiliary mass configured to move in the same direction with the oscillatory displacement of the host structure; and
a shunt piezoelectric system electromechanically coupled between the host structure and the auxiliary mass, the shunt piezoelectric system comprising an array of a plurality of shunt piezoelectric devices, each connected to at least one shunt circuit, each piezoelectric device being configured to generate electric charge in response to the relative movement of the host structure and the auxiliary mass,
wherein part of the electric charge is transmitted to at least one shunt circuit of each piezoelectric device, and
wherein the electrical characteristics of the shunt circuit are adapted to control the oscillatory characteristics of the corresponding piezoelectric devices in one or more vibration frequency ranges of the host structure so as to tune the vibration attenuation device to suppress the host structure vibrations at the desired frequency ranges.

The present invention provides a Broadband Tunable Piezoelectric Mass Damper (PIEMDAM), which reduces the vibrations of a range of host structure, without being limited to, lightweight host structures, such as large flexible structures (e.g. wind turbines), and Means of Transportation (e.g. planes). The device of the present invention is capable of suppressing vibrations resulting from the movement of the host structure in various frequency ranges covering both broadband and tonal excitations. This is achieved by providing an array of piezoelectric devices, which are connected mechanically and electrically in a desired configuration, each provided with a one or more shunt circuits, having impedance characteristics adapted for the suppression of the desired vibration frequency ranges of the host structure.

According to embodiments of present invention, the piezoelectric devices in the array are mechanically connected in parallel, or in series, or combined, to respectively adjust the stiffness of the shunt piezoelectric system. The piezoelectric devices in the array may be electrically connected in parallel, or in series, or combined, to respectively adjust the electromechanical characteristics of the shunt piezoelectric system.

According to embodiment of the present invention, each piezoelectric device comprising at least one piezoelectric stack positioned within a mechanical frame operating as a stroke amplification mechanism. The piezoelectric stack or stacks may be provided with predetermined electrical characteristics to achieve a desired conversion of mechanical energy to electrical energy. The mechanical properties of the frame may further be adapted to achieve a desired stroke amplification of the auxiliary mass, allowing for the transformation of the mechanical energy of the host structure, to electrical energy and subsequent dissipation in the resistance.

According to embodiments of the present invention, the electrical characteristics of the shunt circuit of each piezoelectric device are adapted to control the electromechanical coupling between the host structure and the vibration attenuation device, to improve the vibration attenuation performance. Each shunt circuit may comprise an inductor and a resistor, and wherein the resistance and inductance values are adjusted to meet a desired vibration attenuation performance for the host structure. Each of the shunt circuits may further comprise a capacitor configured to provide further vibration tuning and vibration suppression performance.

According to embodiments of the present invention, the electrical characteristics of each shunt circuit may be adapted to control the amplification of the electromechanical coupling and corresponding transformation of kinetic energy to electric energy in different frequency ranges simultaneously so that the vibrations of the host structure are attenuated in one or more eigenmodes for broadband multi-modal control and/or tonal frequency excitations for multi-tonal control.

According to embodiments of the present invention, the nominal impedance values of each shunt circuit required for shifting anti-resonances of the host structure are calculated a-priori and are independent of the host structure to which the device is attached.

According to embodiments of the present invention, each piezoelectric device is connected to a plurality of shunt circuits, each configured to tune the vibration attenuation device to reduce the host structure vibrations at a desired frequency range. For example, each shunt circuit may be provided with different electrical characteristics so that vibration suppression is tuned to different frequency ranges.

According to embodiments of the present invention, the tunable vibration attenuation device is provided or connected to one or more switching mechanisms for selecting a shunt circuit for each piezoelectric device. As such, the vibration attenuation device may be tuned to suppressed different vibration frequencies of the host structure. A processing device may be provided for operating each switching mechanism based on information received from one or more vibration sensors attached to the host structure. For example, the processing device is configured to process data received from vibration sensors, such as accelerometers, and accordingly operate the switching mechanism to select a shunt circuit for each piezoelectric device for the suppression of the vibration frequency ranges detected. The processing device may be loaded with a corresponding software program configured to process the vibration sensor data and selecting the appropriate shunt circuit for each piezoelectric device.

According to embodiments of the present invention, the shunt piezoelectric system is configured for harvesting the energy generated at each piezoelectric device of the shunt piezoelectric system during the relative movement between the host structure and the auxiliary mass. The harvested energy can be stored or used for powering the processing device and/or the one or more switching mechanisms and/or other circuits unrelated to the present invention.

### Brief Description of the drawings

The following drawings are provided as an example to explain further and describe various aspects of the invention:
Figure 1 shows an exemplified implementation of a tunable vibration attenuation device according to embodiments of the present invention;
Figure 2 shows an exemplified implementation of a tunable vibration attenuation device with a plurality of piezoelectric devices mechanically connected in parallel according to embodiments of the present invention;
Figure 3 shows an exemplified implementation of the tunable vibration attenuation device with a plurality of piezoelectric devices mechanically connected in series according to embodiments of the present invention;
Figure 4 shows an exemplified frequency response for the tunable vibration attenuation device configuration shown in figure 3;
Figure 5 shows an exemplified application of the tunable vibration attenuation device on a host structure, which functions under multiple tonal excitations;
Figures 6 to 10show responses of an exemplified application of the proposed tunable vibration attenuation structure to a lightweight host structure.

### Detailed Description

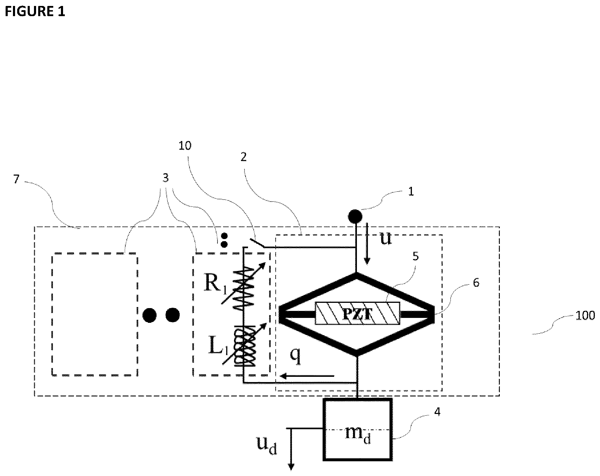

The functionality of the proposed system and method will be illustrated using the exemplified implementations shown in the figures 1 to 10, which will be described in more detail below. It should be noted that any references made to specific types of data are only indicative and do not restrict the proposed functionality in any way. While the proposed system and method have been shown and described with reference to certain illustrated embodiments thereof, it will be understood by those skilled in the art that various changes in form and details may be made therein without departing the proposed functionality.

In general, the present invention relates to a Broadband Tunable Piezoelectric Mass Damper (PIEMDAM), which aims at reducing the vibrations of, without being limited to, lightweight host structures, such as large flexible structures and Means of Transportation. The PIEMDAM consists of an auxiliary mass mounted on an array of at least one, not necessarily same, piezoelectric devices (mechanically connected in parallel or in series), each of which is connected to a separate shunt RL circuit. The rigid mounting of an PIEMDAM to a host structure can be achieved with bolts and nuts, or with adhesive, having minimal interference with the existing structure, considering also its insignificant weight compared to the host structure. The position of the structural integration of the PIEMDAM may require investigation of the host structure dynamic characteristics, for optimal performance. However, the tuning and re-tuning frequencies of this device are independent from the host structure, meaning that the impedance values needed to tune a certain device can be calculated a-priori and are the same for all host structures. The direction of the mounting of the PIEMDAM and the movement of the auxiliary mass should coincide with the main direction of the excitation, to achieve the mitigation of the biggest possible fraction of the kinetic energy of the host structure, without excluding the possibility of many PIEMDAMs in different directions.

The proposed device is based on the vibration control method of the TMD combined with multiple shunted piezoelectric devices in order to attenuate the vibrations of host structures in multiple frequency ranges simultaneously. The proposed PIEMDAM consists of an auxiliary mass mounted on an array of at least one, not necessarily same, shunted piezoelectric devices (mechanically connected in parallel or in series), each of which is connected to a separate shunt RL circuit. The piezoelectric device used for this application is required to exhibit sufficient stiffness for the auxiliary mass oscillation, simultaneously with high electromechanical coupling for high transformation of the mechanical energy of the host structure, to electrical energy and subsequent dissipation in the resistance. A conventional piezoelectric stack could fulfil these two requirements, however, it would exhibit extremely high stiffness, thus the tuning of the auxiliary mass to relatively low frequency range would require very heavy auxiliary mass, turning this device to non-functional for many engineering or lightweight applications, where mass and volumetric limitations exist. For this reason, the proposed PIEMDAM device uses specially adapted piezoelectric devices, where a plurality of piezoelectric stacks is built in a stiffness-decreasing and stroke-amplifying mechanical frame, such as the amplified piezoelectric actuators (APAs) proposed in US6927528B2, or other similar devices, keeping the high electromechanical coupling, and greatly decreasing the equivalent stiffness. Such piezoelectric devices introduce high electromechanical coupling, while amplifying the stroke of the auxiliary mass, allowing for high transformation of the mechanical energy of the host structure, to electrical energy and subsequent dissipation in the resistance, therefore overcoming the main drawback of the piezoelectric patches. In the proposed PIEDMAM device, also referred to as tunable vibration attenuation device, the array of the shunted piezoelectric devices may be mechanically arranged in parallel, in series, or combined, giving options for higher or lower equivalent stiffness compared to the single piezoelectric device, tuning simultaneously the required auxiliary mass. In this way strict weight limitations of the host structure may be overcome.

Moreover, the appropriate selection of resistance-inductance combination in each shunt circuit of the proposed PIEMDAM device can lead to amplification of the electromechanical coupling and relevant transformation of kinetic energy of the host structure to electric energy in different frequency ranges simultaneously. In this way, the vibration attenuation can be achieved in multiple eigenmodes of the host structure, also referred to as multi-modal control, and/or multiple tonal excitation frequencies, also referred to as multi-tonal control, thereby overcoming the main drawback of the conventional TMD approach. Furthermore, the electromechanical coupling can alter the eigenfrequency of the auxiliary mass, allowing for the tuning of its anti-resonance to a new frequency, overcoming one of the main drawbacks of the TMD and paving the way for the application of the PIEMDAM in many engineering applications. In addition, the proposed PIEMDAM can introduce N+1 anti-resonances to the host structure, given that it consists of N shunted piezoelectric devices, thus is able to suppress to N+1 tonal frequencies. The N anti-resonances are introduced by the N shunted piezoelectric devices, and one more anti-resonance is introduced by the auxiliary mass. The initially tuned frequency ranges of this device can be altered by changing the values of the RL circuits, re-tuning the device, and thus complying with potential alterations of the system dynamics or excitation. It is important to point out that the frequency ranges in which the proposed PIEMDAM anti-resonances are tuned, and re-tuned if the conditions require it, are independent from the host structure and depend only on the electromechanical characteristics of the PIEMDAM, making this device able to fit in varying dynamic conditions. Furthermore, since the proposed anti-vibration device may be provided with one or more piezoelectric devices, an energy harvesting circuit could be realised, such that the electric energy generated due to the kinetic energy of the host structure, is also harvested, rather than only provided to the shunt circuit and dissipated as heat in the resistance. This harvested energy could be used, either to provide the power for the re-tuning of the RL values so as to tune the device to a newly excitation frequency range, or to provide power to other circuits connected to the PIEMDAM device.

Figure 1 shows an exemplified implementation of the proposed PIEMDAM device 100 according to embodiments of the present invention. The proposed PIEMDAM 100, also referred to as a tunable vibration attenuation device, is provided in this example with one shunted piezoelectric device 7 comprising at least one shunt circuits 3. As shown in Figure 1, more than one shunt circuits may be provided being mechanically and/or electrically connected in parallel and/or series, depending on the configuration, wherein each shunt circuit 3 may be provided with different impedance values. A switch 10 may be provided, which may be operated under specific excitation conditions to dynamically select the shunt circuit 3 or shunt circuit combination with impedance values that have been tuned to provide the required vibration under the specified excitation frequency range. The PIEMDAM 100 is configured to be mounted to a dynamically excited host structure at point 1. The proposed PIEMDAM 100 is provided with an auxiliary mass 4, a specially adapted piezoelectric device 2 comprised of at least one piezoelectric stack 5 positioned with a stroke amplifying frame 6, and at least one combined impedance shunt circuit 3. The piezoelectric stack 5 exhibits high piezoelectric coefficient (e̅). The frame 6, which serves as a stroke amplifying mechanism, is configured for reducing the equivalent stiffness of the shunted piezoelectric device (kd-cd), such that a relatively low-weight auxiliary mass 4 can be used to tune the mechanical eigenfrequency of the auxiliary mass to lower frequency ranges, which cause the main vibrational discomfort. Due to the dynamic excitation of the host structure, a large portion of its kinetic energy is transmitted to the auxiliary mass 4, which is adequately confined to move in the same direction (u_{d}) with the oscillatory displacement (u) of the host structure. At the same time, the relative movement between the host structure and the auxiliary mass 4 creates electric charge in the piezoelectric device 2, part of which is stored at the capacitor (Cₚ) of the piezoelectric material, while the rest of this charge (q) is transmitted to the shunt circuit 3 as electric current. Because of the electromechanical coupling, a significant amount of the kinetic energy of the host structure is transformed into electrical energy in the shunt circuit 3, and the required vibration control performance is achieved.

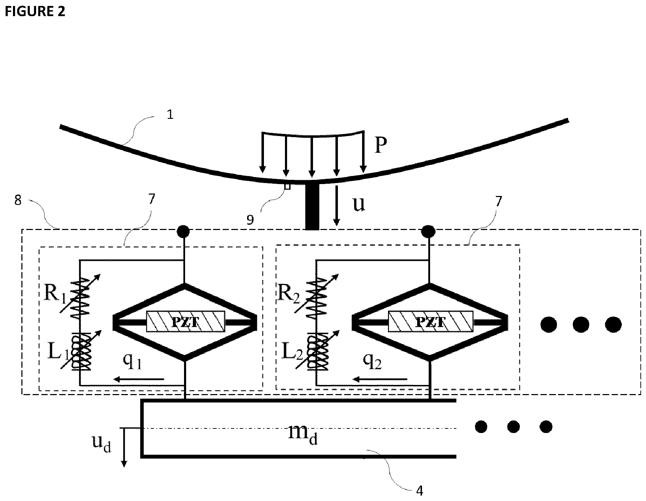

Figure 2 shows an exemplified application of the proposed PIEMDAM 100 on a large host structure 1, which is under dynamic excitation of unsteady broadband loads (P). The PIEMDAM consists of shunt piezoelectric system 8 comprising an array of shunt piezoelectric devices 7, as described with reference to figure 1, mechanically connected in parallel and coupled to the auxiliary mass 4. Each piezoelectric device 2 of the shunt piezoelectric device 7 is connected to a shunt circuit. For illustration purposes, only two shunted piezoelectric devices 7 are shown, and the part of the auxiliary mass which corresponds to them. As seen, all shunted piezoelectric devices 7 of the shunt piezoelectric system 8 are attached to the same auxiliary mass 4, which is restricted to move in the same direction (u_{d}) as the oscillatory displacement (u) of the host structure. The applied unsteady dynamic loads may excite many eigenmodes of the host structure 1, and cause severe vibrations, which can be measured with one or more sensor devices 9, such as accelerometers. An appropriate combination of equivalent stiffness of the shunt piezoelectric system 8 and auxiliary mass 4 is selected to provide tuning of the PIEMDAM 100 to one of the dominant eigenmodes of the host structure 1, while the rest of the eigenfrequencies of interest can be attenuated by choosing appropriate electrical impedance values in each of the shunt circuits 3, leading to different shunt circuit charges (q1 and q2), and being able to achieve even one-to-one match between each shunt circuit impedance and each structural eigenmode, thereby reaching the desirable vibration suppression performance.

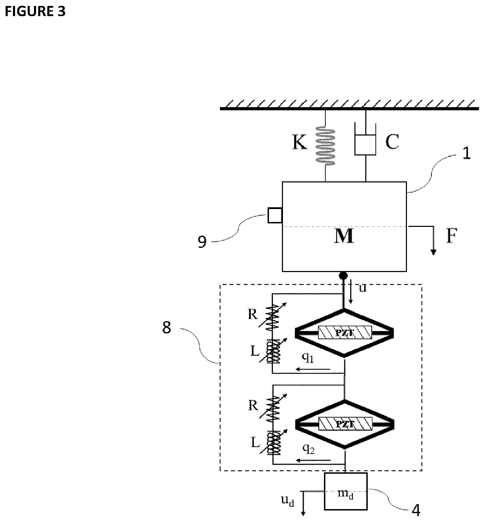

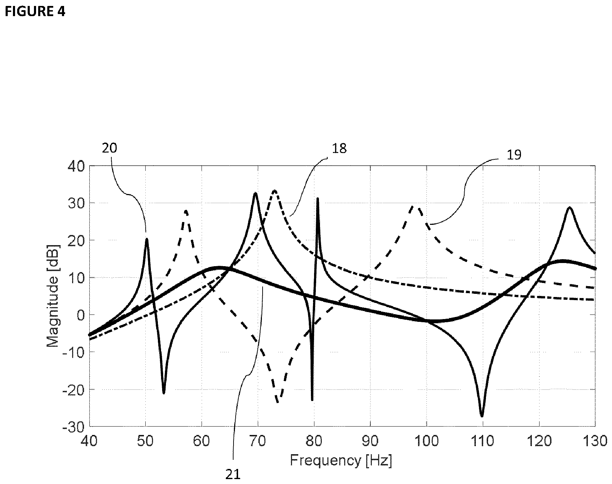

Figure 3 shows an exemplified configuration of the proposed PIEMDAM device 100 for attenuating vibration from a single degree of freedom (DOF) host structure 1. This structure 1 functions under dynamic excitation, and the vibrations that arise can be measured with accelerometers 9 and the measured accelerance signals (accelerations as a response signal with the stimulus of applied force F) are presented in the frequency domain as frequency response functions (FRFs), as shown in figure 4. The proposed PIEMDAM device 100 is configured for vibration reduction using a shunted piezoelectric system 8 comprising two shunted piezoelectric devices 7 mechanically connected in series. Each provided with a shunt circuit 3 having a predetermined electrical impedance, leading to different shunt circuit charges (q1, q2). This PIEMDAM device configuration (two piezoelectric devices connected in series) results to a half of equivalent stiffness compared to the use of a single shunted piezoelectric device 2, leading to requiring a reduced weight auxiliary mass 4, approximately half the weight, to tune the PIEMDAM device to the eigenfrequency of the host structure 1. The direction of application of the shunt piezoelectric system 8 and the auxiliary mass 4 coincides with the direction of oscillatory excitation (u) of the host structure, for the highest possible attenuation of vibrations. The response of the host structure 1, without the application of the PIEMDAM device 100, is observed in the frequency domain 18 of figure 4, showing its unique eigenfrequency at approximately 73Hz. The effect of the short circuit PIEMDAM configuration, which is equivalent to a conventional TMD with the same stiffness and auxiliary mass, is observed in the frequency domain 19 of figure 4. In this curve, the amplitude of accelerance near the host structure resonance is highly reduced, due to the anti-resonance introduced by the auxiliary mass, however two new structural eigenfrequencies are observed, one in higher and another in lower frequency. Adding inductance to each one of the shunt circuits 3 introduces two new anti-resonances to the host structure, represented by the frequency response 20, while also shifting the auxiliary mass anti-resonance. This new frequency response would be extremely favourable for an application that is required to function under very low vibrations and functions under tonal excitation in 52Hz, 80Hz, and 110Hz. Different values of inductance would retune the anti-resonances to the required frequency vicinities. Adding resistance to the shunt circuits 3, a new frequency response 21 of the host structure is observed, which is highly damped in a very large frequency range, compared to the response of other PIEMDAM configurations, for example the one shown in Figure 4, due to the dissipation of the transformed electrical energy into heat. Tuning the resistance values of the shunt circuits 3 could achieve higher dissipation and damping to preferred frequency zones. This frequency response would be highly appreciated in a more complicated host structure, which is needed to have minimal oscillations, and functions under broadband and unsteady frequency excitation, because the multiple excited structural mode would be attenuated. Adding more shunted piezoelectric devices 7 would improve the performance of the anti-vibration device in more frequency ranges. From the above examples, it is evident that the proposed PIEMDAM is superior to a conventional TMD having the same stiffness and auxiliary mass. In the presented case study, the used quantities are: (K=194kN/m, C=10Ns/m, M=0.922kg, F=1N, md=0.259kg, kd=111kN/m-cd=4Ns/m-e̅=0.65N/V-Cp=27µF for each piezoelectric device, R1=50Ω, L1=130mH, R2=50Ω, L2=170mH). It is pointed out that the values of resistance and inductance are not optimal for the studied frequency, thus even higher vibration attenuation might be achieved.

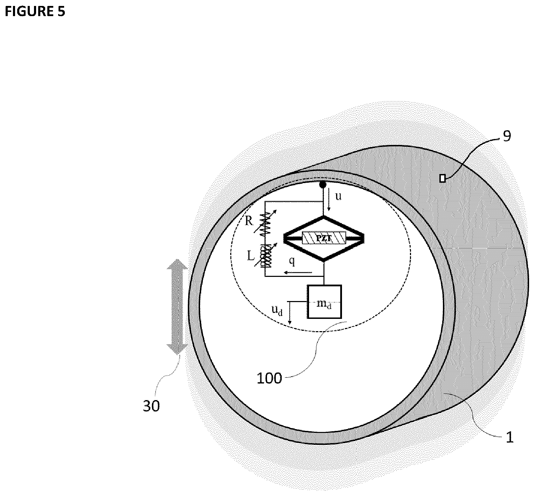

Figure 5 shows an exemplified application of a PIEMDAM device 100 consisting of a single shunted piezoelectric device 2 on a host structure 1, which functions under multiple tonal excitations. The direction of application of the PIEMDAM 100 and the auxiliary mass 4 coincides with the main direction of the applied excitation to the host structure 1, for the highest possible attenuation of vibrations.

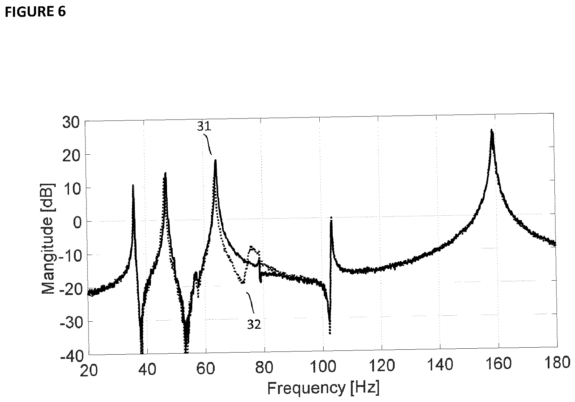

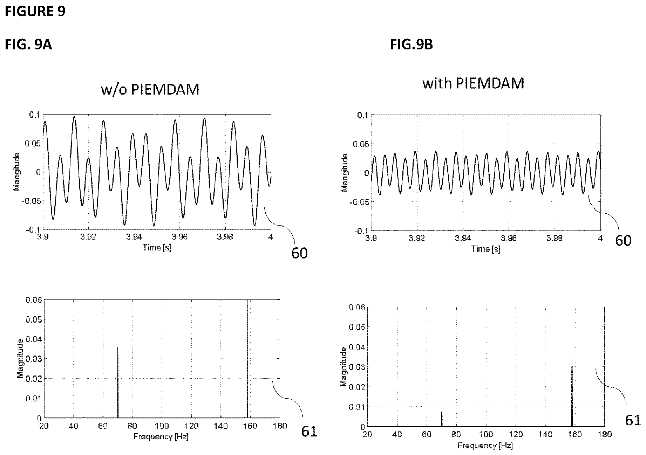

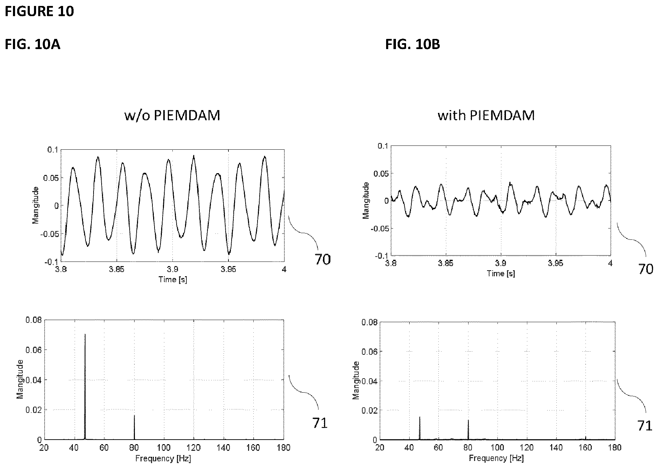

An experimental investigation and the respective results of the application of a PIEMDAM on a lightweight structure, similar to the one shown in Figure 5, is presented in Figures 6 to 10. The PIEMDAM consists of a single shunted piezoelectric device 7. The studied host structure exhibits a total weight of 112kg and is expected to function under multiple tonal excitations. Before applying the appropriate PIEMDAM parameters for tonal excitations, a frequency analysis of the host structure 1 is implemented, where broadband white noise excitation is applied to the host structure via an electromagnetic shaker, and the Frequency Response Functions of the studied host structure are presented in Figures 6 to 8. The results of the tonal excitation for specific cases are presented without and with the PIEMDAM in Figures 9 and 10.

In Figure 6, the frequency responses of the structure (measured by an attached accelerometer) are illustrated for two conditions: A) the baseline state, where no antivibration device is attached, represented by response 31, and B) the short circuit PIEMDAM (equivalent to a conventional TMD with the same stiffness and auxiliary mass), representing by response 32. The studied host structure exhibits four strong eigenfrequencies at 36Hz, 47Hz, 65Hz and 158Hz, as seen in response 31. The piezoelectric device used in the experiment is the APA1500L, and the auxiliary mass was selected to be 460g, so that, in accordance with the piezoelectric device mechanical stiffness, the short circuit PIEMDAM creates an anti-resonance at 73Hz, as seen in response 32. The addition of the PIEMDAM affects only a narrow bandwidth around the targeted frequency (73Hz), while the rest of the frequency response remains similar to the baseline.

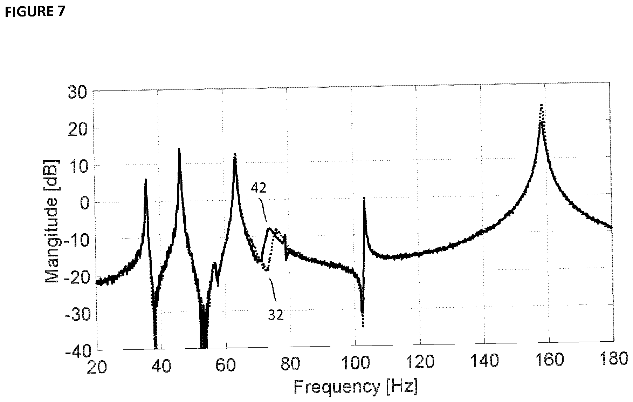

In Figure 7, the frequency responses of the structure (measured by an attached accelerometer) are illustrated for two conditions: A) the short circuit PIEMDAM (equivalent to a conventional passive TMD with the same stiffness and auxiliary mass), indicated by response 32 of Figure 6, and B) the PIEMDAM with 30mH inductance and 6Ω resistance, indicated by response 42, by attaching commercially available coils to the shunt circuit. This inductance affects the mass anti-resonance, shifting it from 73Hz to 70Hz, and introduces an electromechanical resonance, which reduces the magnitude at 158Hz.

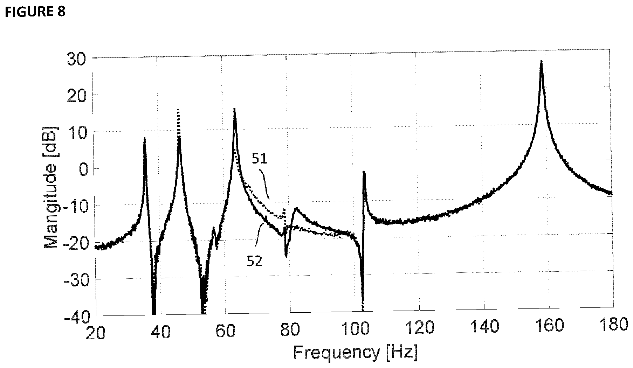

In Figure 8, the frequency responses of the structure (measured by an attached accelerometer) are illustrated for two conditions: A) the PIEMDAM with 110mH inductance and 10Ω resistance represented by response 51, by attaching commercially available coils to the shunt circuit, and B) the PIEMDAM with 330mH inductance and 15Ω resistance represented by response 52. With 110mH inductance, the mass anti-resonance is shifted close to the 65Hz resonance, highly reducing its magnitude, whereas the effect of electromechanical anti-resonance is vanished due to the coil 10Ω resistance. With 330mH inductance, the mass anti-resonance is shifted close to the 47Hz resonance, highly reducing its magnitude, whereas the electromechanical anti-resonance has approached the short circuit anti-resonance and is evident close to 80Hz.

In Figure 9a and 9b, the time responses 60 and their respective frequency content 61 of the structure (measured by an attached accelerometer) are illustrated for simultaneous tonal excitations at 70Hz and 158Hz without the PIEMDAM on the left and with the PIEMDAM on the right, having an auxiliary mass of 460g, and a shunt circuit with 30mH inductance and 6Ω resistance. As it was demonstrated previously with reference to Figure 7, these parameters, along with the studied piezoelectric device (APA1500L), tune the PIEMDAM at 70Hz and 158Hz. As a result, the magnitude of the acceleration is reduced more than 50% for both tonal frequencies, as shown in Figure 9b.

Similarly, in Figures 10a and 10b, the time response 70 and its respective frequency content 71 of the structure (measured by an attached accelerometer) are illustrated for tonal excitations at 47Hz and 80Hz without the PIEMDAM on the left, and with the PIEMDAM on the right, having an auxiliary mass of 460g, and a shunt circuit with 330mH inductance and 15Ω resistance. As it was demonstrated previously with reference to figure 8, these parameters, along with the studied piezoelectric device (APA1500L), tune the PIEMDAM at 47Hz and 80Hz. As a result, the magnitude of the acceleration is simultaneously reduced more than 70% for 47Hz and more than 10% for 80Hz, as shown in figure 10b. A noticeable remark regarding the studied example is that, having a TMD with the same stiffness as the studied piezoelectric device, the auxiliary mass needed to tune the TMD to 47Hz would be 1.14kg, that is almost 2.5 times the studied 460g auxiliary mass. Another remark regarding the studied example is that the experimental campaign was aligned with a-priori numerical analysis for choosing the appropriate PIEMDAM parameters, however higher vibration attenuation performance is expected with higher quality experimental setup and parameter optimization. Finally, using more shunted piezoelectric devices would introduce equivalent number of anti-resonances, making this anti-vibration device able to suppress equivalent number of tonal excitations in different frequency ranges.

As already showcased, the presented anti-vibration device is able to provide vibration reduction capabilities both in broadband and in tonal frequency excitations. Some examples of the application of the PIEMDAM in real structures are presented below.

Regarding the broadband dynamic loads, an example of application of the PIEMDAM could be its mounting to aircrafts such as airplanes, which function under unsteady aerodynamic loads, which mainly act on the horizontal stabilizer (tailplane), causing discomfort and diminution of travel quality to passengers. Applying the proposed PIEMDAM device could attenuate the vibrations of many structural modes, enhancing the travel quality and increasing the structural integrity of crucial structural components, adding small weight to the structure. It is also known that the fuel fraction reaches very high values in many airplanes (even above 40% as referenced in some technical reports ). As a result, the dynamic characteristics of the airplanes exhibit large alterations during flight (mass diminution due to fuel consumption), meaning that the structural modes also alter, and an initially tuned damping device could be detuned. The PIEMDAM could maintain optimal tuning during the flight, by appropriately changing the values of resistance and inductance, achieving maximum vibration control during the whole flight. For example, this constant tuning could be implemented with multiple shunt branches for each piezoelectric device, and selecting the appropriate branch in each time increment, through a switching mechanism.

Regarding the multiple tonal loads, an example of application of the PIEMDAM could be its mounting to helicopters, where at least two high tonal frequency vibrations exist, due to rotors rotation. For example, the BO105 helicopter has a rotor of four wings and rotation speed of 7Hz. It is known that intense vibrations are observed on the whole structure on 4/rev (28Hz) and 8/rev (56Hz), as indicated by J. Stoppel and M. Degner, " Investigations of Helicopter Structural Dynamics and a Comparison with Ground Vibration Tests", SIXTH EUROPEAN ROTORCRAFT AND POWERED LIFT AIRCRAFT FORUM, https://doi.org/10.4050/JAHS.27.34 ", 1980. Selecting appropriate values for a single shunted piezoelectric device PIEMDAM, the auxiliary mass anti-resonance can be tuned to 28Hz and the shunt circuit anti-resonance to 56Hz, adding minimal weight to the structure (indicative mass of 5kg). As already discussed, such anti-vibration device requires no power source and attenuates simultaneously both frequencies of interest.

Another example of application of the PIEMDAM for suppressing multiple tonal vibrations is its mounting to a host structure which functions under the tonal frequency of an engine, and the harmonics it produces. It is highly possible that one of the harmonics excites one high amplitude structural mode of the structure. A PIEMDAM with one shunted piezoelectric device could be used, such that the auxiliary mass anti-resonance suppresses the engine tonal frequency, and the shunt circuit anti-resonance suppresses the harmonic that excites the high amplitude structural mode, leading to the desired vibration reduction performance.

## Claims

1. A tunable vibration attenuation device (100) configured to be coupled to a host structure (1) for attenuating vibrations in multiple frequency ranges, the device (100) comprising:
an auxiliary mass (4) configured to move in the same direction with the oscillatory displacement of the host structure (1); and
a shunt piezoelectric system (8) electromechanically coupled between the host structure (1) and the auxiliary mass (4), the shunt piezoelectric system (8) comprising an array of a plurality of shunt piezoelectric devices (7), each comprising a piezoelectric device (2) connected to at least one shunt circuit (3), each piezoelectric device (2) being configured to generate electric charge in response to the relative movement of the host structure and the auxiliary mass,
wherein part of the electric charge is transmitted to the at least one shunt circuit (3), and
wherein the electrical characteristics of the shunt circuit (3) are adapted to control the oscillatory characteristics of the corresponding piezoelectric devices (2) in one or more vibration frequency ranges of the host structure (1) so as to tune the vibration attenuation device to suppress the host structure (1) vibrations at the desired frequency ranges.

2. The device (100) of claim 1, wherein the piezoelectric devices (2) in the array are mechanically connected in parallel, or in series, or combined, to respectively adjust the stiffness of the shunt piezoelectric system (8).

3. The device (100) of claim 1 or 2, wherein the piezoelectric devices (2) in the array are electrically connected in parallel, or in series, or combined, to respectively adjust the electromechanical characteristics of the shunt piezoelectric system (8).

4. The device (100) of claim 1, wherein each piezoelectric device (2) comprising at least one piezoelectric stack (5) positioned within a mechanical frame (6) operating as a stroke amplification mechanism.

5. The device (100) according to any one of claims 1 to 4, wherein the electrical characteristics of the shunt circuit (3) of each shunt piezoelectric device (7) are adapted to control the electromechanical coupling between the host structure (1) and the vibration attenuation device (100), to improve the vibration attenuation performance.

6. The device (100) according to any one of the preceding claims, wherein the electrical characteristics of each shunt circuit (3) are adapted to control the amplification of the electromechanical coupling and corresponding transformation of kinetic energy to electric energy by the piezoelectric device (2) in different frequency ranges simultaneously so that the vibrations of the host structure (1) are attenuated in one or more eigenmodes for broadband multi-modal control and/or tonal frequency excitations for multi-tonal control.

7. The device (100) of any one of the preceding claims, wherein the impedance of each shunt circuit (3) comprises an inductor and a resistor, and wherein the resistance and inductance values are adjusted to meet a desired vibration attenuation performance for the host structure (1).

8. The device (100) of any one of the preceding claims, wherein each of the shunt circuits comprises a capacitor configured to provide further vibration tuning and vibration suppression performance.

9. The device (100) of any one of the preceding claims, wherein the impedance values required for shifting anti-resonances of the host structure (1) are calculated a-priori and are independent of the host structure (1) to which the device (100) is attached.

10. The device (100) of any one of the preceding claims, wherein each piezoelectric device (2) is connected to a plurality of shunt circuits (3), each configured to tune the vibration attenuation device to reduce the host structure (1) vibrations at a desired frequency range.

11. The device (100) of claim 10, further comprising one or more switching mechanisms (10) for selecting a shunt circuit (3) combination for each piezoelectric device (2) of the shunt piezoelectric device (7).

12. The device (100) of claim 11, further comprising a processing device configured to operate each switching mechanism based on information received from one or more vibration sensors attached to the host structure (1).

13. The device (100) of claim 12, wherein the shunt piezoelectric system (8) is configured to generate electrical power for powering the one or more switching mechanisms and/or the processing device.

14. The device (100) of any one of the preceding claims, wherein the shunt piezoelectric system (8) is configured for harvesting the energy generated at each piezoelectric device in response to the relative movement between the host structure and the auxiliary mass, the harvested energy being stored or directly used for powering circuits connected to the piezoelectric device.

15. A host structure (1) comprising a device (100) according to any one of claims 1 to 14.
